# EUROPEAN PATENT APPLICATION

(11) **EP 4 386 217 A1**
(43) Date of publication of application: **19.06.2024**
(21) Application number: 22213479.3
(22) Date of filing: 14.12.2022
(51) Int. Cl.: F16B 5/06, F16B 21/09, E01F 9/677

(54) **A FASTENING DEVICE**

(71) Applicant: Worxsafe AB, 831 52 Östersund (SE)
(72) Inventor: Jönsson, Bengt, 836 95 Ås (SE)
(74) Representative: AWA Sweden AB

(57) **Abstract**

A fastening device (100, 400, 500, 600, 700) configured to be connected to a post (800), the fastening device (100, 400, 500, 600, 700) comprising: a base portion (110, 410, 510, 610, 710), which is plate shaped; at least one outwardly extending fastening protrusion (120, 420, 520, 620, 720a, 120, 420, 520, 620, 720b) being arranged at the base portion (110, 410, 510, 610, 710) and being configured to engage with an associated fastening aperture (810a, 810b) in the post (800); and a resilient locking mechanism (130, 430, 530, 630, 730) arranged at the base portion (110, 410, 510, 610, 710), wherein the resilient locking mechanism (130, 430, 530, 630, 730) is configured to engage with an associated locking aperture (810) of the post (800) thereby locking the fastening device (100, 400, 500, 600, 700) to the post (800) and preventing the at least one fastening protrusion from disconnecting from the post.

## Description

### Technical field

The present disclosure relates to a fastening device. More particularly, the disclosure relates to a fastening device configured to be connected to a post and comprising a base portion and at least one outwardly extending fastening protrusion.

### Background art

Fastening devices for connecting one device to another are well known in the art. The fastening device may be designed in a various of different ways depending on the devices to be fastened to each other among other things. The fastening devices may be designed to be able to releasably connect the devices to each other such that the devices are able to be disconnected from each other as well. When designing a fastening device, it is often desirous to take into account a number of different design criteria such that a strong and stable but also user-friendly fastening device is provided.

However, one drawback with the fastening devices of today is that the fastening device may easily be disconnected from the device in an unwanted way.

For these reasons, there is a demand for a fastening device with an improved connection as well as improvements, e.g., in terms of improved safety and usability for a user.

### Summary

It is an object to mitigate, alleviate or eliminate one or more of the above-identified deficiencies in the art.

According to a first aspect, there is provided a fastening device configured to be connected to a post, the fastening device comprising:
a base portion, which is plate shaped;
at least one outwardly extending fastening protrusion being arranged at the base portion and being configured to engage with an associated fastening aperture in the post; and
a resilient locking mechanism arranged at the base portion,
wherein the resilient locking mechanism is configured to engage with an associated locking aperture of the post thereby locking the fastening device to the post and preventing the at least one fastening protrusion from disconnecting from the post.

Due to the design of the resilient locking mechanism, it is possible for the resilient locking mechanism to engage with the locking aperture in an automatic way. The resilient locking mechanism is designed to automatically engage with the associated locking aperture once the fastening device is connected to the post. When the resilient locking mechanism engages with the locking aperture, the fastening device is fastened and locked to the post. Due to the resilient locking mechanism, it is further possible to release the resilient locking mechanism from the locking aperture with a simple maneuvering of the resilient locking mechanism. When the resilient locking mechanism is released from the locking aperture, it is possible to move, or disengage, the fastening protrusion from the fastening aperture. Thus, the fastening device is typically releasably connected to the post. The fastening protrusion is configured to engage with the fastening aperture and the resilient locking mechanism is configured to engage with the locking aperture thereby connecting the fastening device to the post. The fastening protrusion may be configured to disengage from the fastening aperture and the resilient locking mechanism may be configured to be released from the locking aperture thereby disconnecting the fastening device from the post. This is advantageous when there is a need to temporary attach the fastening device to the post.

This is further advantageous as it allows for connecting the fastening device to the post in an easy and user-friendly way but due to the resilient locking mechanism, there is a need to unlock the fastening device from the post before the fastening device may be disconnected from the post. Thus, the fastening device is connected to the post in a stable and secure way in which a reduced risk of unintentionally disconnecting the fastening device from the post is achieved.

The fastening protrusion typically engages with the fastening aperture of the post simultaneously the resilient locking mechanism engages with the locking aperture such that a fastening and a locking are obtained at the same time. This is advantageous as it allows for connecting the fastening device to the post in an easy and user-friendly way in which both the fastening, the engagement between the fastening protrusion and the fastening aperture, and the locking, the engagement between the resilient locking mechanism and the locking aperture, are provided. Thus, it is possible to fasten the fastening device to the post but also to lock the fastening device to the post. Thereby, a more stable and secure fastening device is provided.

Due to the resilient locking mechanism of the fastening device, it is possible to lock the fastening device to the post without the need of using any bolts or the like. This provides for that an easy and user-friendly fastening device is achieved.

The fastening device is typically arranged for connecting a device to the post in an easy and user-friendly way, wherein the fastening device forms the connection between the device and the post. By way of example, the fastening device may be attached to a road sign thereby connecting the road sign to the post. This is especially advantageous for temporary road signs which should be easy to connect, but also easy to disconnect, from the post. This should however only be seen as an example, and other devices may be connected to the post via the fastening device as well.

The fastening device may be made of a plastic material. The base portion and the fastening protrusion may be made of the same material. The resilient locking mechanism may be made of a different material. The engagement portion and the resilient portion may be made of different materials. The base portion, the fastening protrusion and the resilient locking mechanism may be made of the same material.

In accordance with one embodiment of the fastening device, the resilient locking mechanism comprises an engagement portion configured to engage with the locking aperture and a resilient portion configured to connect the engagement portion with the base portion.

Due to the engagement portion being connected to the base portion via the resilient portion, the engagement portion is movable in relation to the base portion. In this context, it should be noted that in a preferred embodiment, the engagement portion is movable along one direction such that the engagement portion may engage with and release from the locking aperture with a simple maneuvering and in a user-friendly way at the same time as the risk of the fastening device being unintentionally disconnected from the post is reduced.

The resilient portion may comprise a base and a free end, wherein the resilient portion extends between the base and a free end. The engagement portion may be arranged at the free end of the resilient portion. The base of the resilient portion may be connected to the base portion of the fastening device.

In accordance with one embodiment of the fastening device, the fastening protrusion comprises a fastening portion configured to engage with the fastening aperture and a shaft portion configured to connect the fastening portion with the base portion. This is advantageous as it allows for the fastening portion and the shaft portion to be individually designed in order to provide for as stable and secure connection to the post as possible.

In accordance with one embodiment of the fastening device, the fastening portion has a wider transversal extension than the shaft portion, and wherein the fastening aperture comprises a wider part, through which the fastening portion and the shaft portion are movable, and an adjacent narrower part, through which only the shaft portion is movable. This is advantageous as it allows for the fastening protrusion to engage with the fastening aperture but also to connect to the fastening aperture with a reduce risk of unintentionally disengage from the fastening aperture. When the fastening protrusion is arranged in the adjacent narrower part, the base portion of the fastening device is typically arranged at one side of the fastening aperture and the fastening portion is typically arranged at another, opposite, side of the fastening aperture such that the fastening device is connected to the post. It should be noted that the base plate is not movable through the wider part of the fastening aperture or through the adjacent narrower part of the fastening aperture.

In accordance with one embodiment of the fastening device, the locking aperture comprises a wider part through which the engagement portion is movable. This is advantageous as it allows for the resilient locking mechanism to engage with the locking aperture and thereby lock the fastening device to the post in an easy and efficient way.

In accordance with one embodiment of the fastening device, when the resilient locking mechanism locks the fastening protrusion to the post, the fastening protrusion is arranged in the adjacent narrower part of the fastening aperture and the engagement portion is arranged in the wider part of the locking aperture thereby preventing the fastening protrusion from disconnecting from the post.

This is advantageous as it allows for easily and efficiently connecting and disconnecting the fastening device to/from the post. This is further advantageous as it allows for a strong and stable connection between the fastening device and the post.

In accordance with one embodiment of the fastening device, the at least one fastening protrusion and the engagement portion are arranged at a longitudinal distance from each other. In this context, it should be noted that in a preferred embodiment, the fastening aperture of the post and the locking aperture of the post are arranged at a longitudinal distance from each other which is substantially equal to the longitudinal distance between the fastening protrusion and the engagement portion such that the fastening and locking of the fastening device may be provided.

The fastening aperture and the locking aperture may be the same aperture, wherein the aperture comprises a wider part and an adjacent narrower part. If this is the case, the wider part and the adjacent narrower part may be arranged at a longitudinal distance from each other which is substantially equal to the longitudinal distance between the fastening protrusion and the engagement portion. The fastening protrusion is typically arranged in the narrower part of the aperture and the engagement portion is typically arranged in the wider part of the aperture when the fastening device is connected to the post thereby preventing the fastening protrusion from disconnecting from the post.

In accordance with one embodiment of the fastening device, the engagement portion comprises an engagement element and wherein the resilient portion is a resilient tongue. The engagement element may be arranged at a free end of the resilient tongue. In this context, the engagement element should be understood to be an element of any shape and size as long as the engagement element is able to engage with the locking aperture of the post in a desired way. In this context, the resilient tongue should be understood to be connected to the base portion at a base of the resilient tongue, wherein the resilient tongue is movable in relation to the base portion along one direction. This is advantageous as it allows for a stable and secure locking mechanism but also a user-friendly and flexible locking mechanism. The resilient tongue may be arranged to force the engagement element to engage with the locking aperture, if possible. Thereby, there is a need to counteract the force from the resilient tongue if there is a need to release the resilient locking mechanism from the post once the fastening device has been connected to the post.

In accordance with one embodiment of the fastening device, the engagement portion comprises an engagement pin and the resilient portion is a spring element. Due to the spring element, the engagement pin is movable along one direction such that the engagement pin may engage with and disengage from the locking aperture in an easy and user-friendly way. The spring element may be arranged to force the engagement pin to engage with the locking aperture, if possible. Thereby, there is a need to counteract the spring force if there is a need to release the resilient locking mechanism from the post once the fastening device has been connected to the post.

According to one embodiment of the fastening device, the engagement portion is a pivotal element, and the resilient portion is a spring element. This is advantageous as it allows for a strong and stable locking mechanism but also a flexible locking mechanism. The spring element may be arranged to force the engagement pin to engage with the locking aperture, if possible. Thereby, there is a need to counteract the spring force if there is a need to release the resilient locking mechanism from the post once the fastening device has been connected to the post.

According to one embodiment of the fastening device, the fastening device comprising two fastening protrusions arranged at the base portion and configured to interact with an associated fastening aperture in the post, respectively. This is advantageous as it allows for an improved stability between the fastening device and the post when the fastening device is connected to the post.

According to one embodiment of the fastening device, the two fastening protrusions are arranged at a longitudinal distance from each other. In this context, it should be noted that in a preferred embodiment, the fastening apertures of the post are arranged at a longitudinal distance from each other which is substantially equal to the longitudinal distance between the two fastening protrusions such that a stable and secure fastening mechanism of the fastening device is achieved.

According to one embodiment of the fastening device, the resilient locking mechanism is arranged between the two fastening protrusions as seen along a longitudinal direction.

The engagement portion of the resilient locking mechanism may be arranged at respective a longitudinal distance from the respective fastening protrusion. The engagement portion may be arranged at an equal longitudinal distance from the respective fastening protrusion. The engagement portion may be arranged closer to one of the fastening protrusions than the other, as seen in the longitudinal direction.

One of the fastening apertures and the locking aperture may be the same aperture, wherein the aperture comprises a wider part and an adjacent narrower part. If this is the case, the wider part and the adjacent narrower part may be arranged at a longitudinal distance from each other which is substantially equal to the longitudinal distance between the respective fastening protrusion and the engagement portion. The fastening protrusions are typically arranged in the narrower part of the respective aperture and the engagement portion is typically arranged in the wider part of one of the apertures when the fastening device is connected to the post thereby preventing the fastening protrusion from disconnecting from the post. One of the fastening protrusions, the engagement portion, and the other fastening protrusion are typically arranged one after the other seen along the longitudinal direction.

According to one embodiment of the fastening device, the resilient locking mechanism is arranged above the two fastening protrusions as seen along a longitudinal direction. The engagement portion of the resilient locking mechanism may be arranged at a longitudinal distance from one of the fastening protrusions. The two fastening protrusions may be arranged at a longitudinal distance from each other. The fastening protrusions and the engagement portion are typically arranged one after the other seen along the longitudinal direction.

According to one embodiment of the fastening device, the fastening portion and the shaft portion are connected such that a smooth transition therebetween is formed at an end surface of the fastening device. This is advantageous as it allows for that the fastening device may be disconnected from the post in an easy and efficient way compared to conventional solutions. In conventional solutions, an end surface of the fastening protrusion typically comprises an edge which extends outwardly from the base portion and makes it difficult to release the fastening device from the post in an easy and efficient way.

According to one embodiment of the fastening device, the base portion and the fastening protrusion are integrally formed. This is advantageous as it allows for an easy but also flexible construction of the fastening device.

According to one embodiment of the fastening device, the base portion, the fastening protrusion, and the resilient locking mechanism are integrally formed. This is advantageous as it allows for an easy construction of the fastening device.

It may be noted that the use of first, second, third, fourth, fifth, etc. are mainly to be seen as labels facilitating reading and that it does not necessarily mean that there need to be all the intervening numbers of portions present. It may e.g. be noted that it is contemplated to have a design where there is a first portion, a second portion, a third portion and a fifth portion, with the fourth portion being omitted. However, to facilitate reading, the numbering first, second, third, fourth, etc., have been consistently used as labels, and in a sense based on an embodiment including all conceivable portions.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The disclosure will by way of example be described in more detail with reference to the appended schematic drawings, which show embodiments of the invention.
Fig. 1 is a schematic front view of an embodiment of a fastening device according to the present disclosure.
Fig. 2 is a schematic rear view of the fastening device of Fig. 1.
Fig. 3 is a schematic side view of a portion of the fastening device.
Figs 4a-b are schematic views of an embodiment of a fastening device according to the present disclosure.
Figs 5a-b are schematic views of an embodiment of a fastening device according to the present disclosure.
Figs 6a-b are schematic views of an embodiment of a fastening device according to the present disclosure.
Figs 7a-b are schematic views of an embodiment of a fastening device according to the present disclosure.
Figs 8a-c disclose a fastening device of the present disclosure mounted at a post.
Fig. 9 discloses a fastening device of the present disclosure which connects a road sign to a post.
Figs 10a-b disclose a fastening device of the present disclosure in which the fastening device is disconnected from a post.

### Detailed description

The present disclosure will now be described more fully hereinafter with reference to the accompanying drawings, in which currently preferred embodiments of the disclosure are shown. The present disclosure may, however, be embodied in many different forms and should not be constructed as limited to the embodiments set forth herein; rather, these embodiments are provided for thoroughness and completeness, and to fully convey the scope of the disclosure to the skilled addressee. Like reference characters refer to like elements throughout.

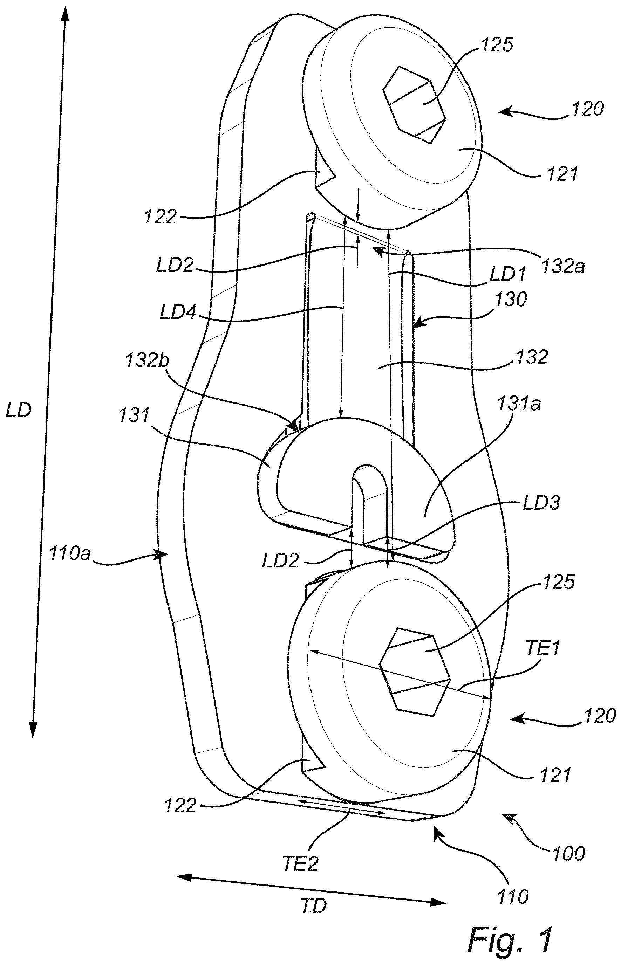

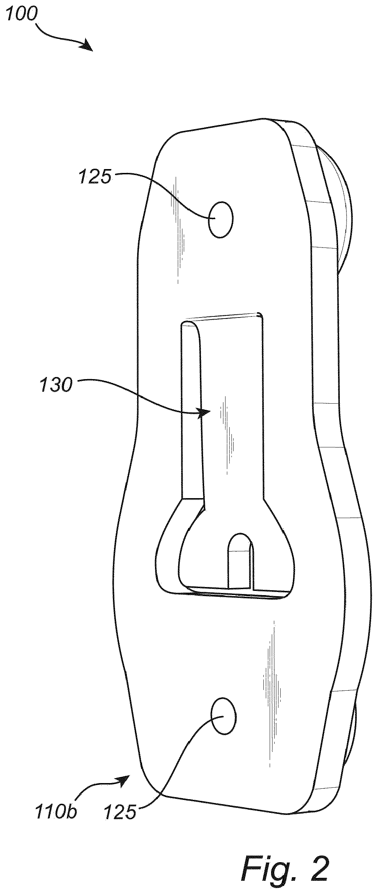

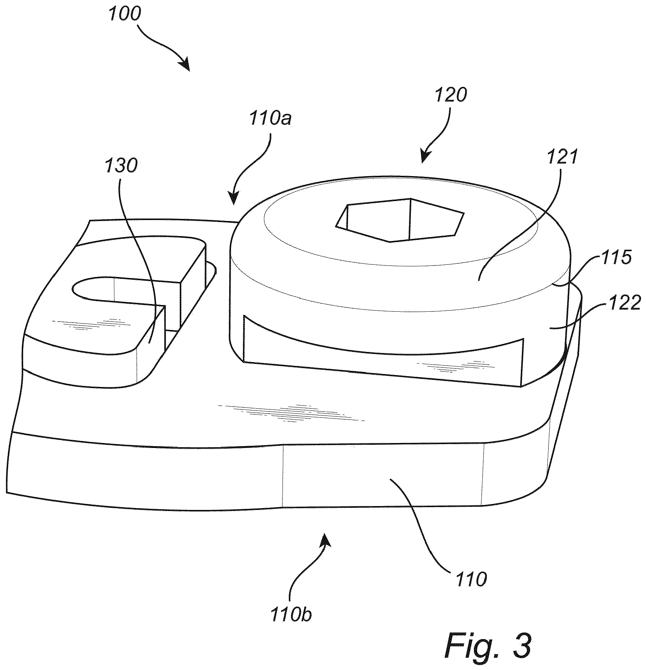

With reference to Fig. 1, a schematic front view of a fastening device 100 is illustrated by way of example. With reference to Fig. 2, a schematic rear view of the fastening device 100 is illustrated by way of example. With reference to Fig. 3, a schematic side view of a portion of the fastening device 100 is illustrated by way of example.

As best illustrated in Figs 1 and 3, the fastening device 100 comprises a first side 110a. As best illustrated in Figs 2 and 3, the fastening device comprises a second side 110b.

With reference to Figs 1-3, the fastening device 100 comprises a plate shaped base portion 110, two outwardly extending fastening protrusions 120 and a resilient locking mechanism 130. The fastening protrusions 120 and the resilient locking mechanism 130 are arranged at the base portion 110. The fastening device 100 may comprise, for example, one fastening protrusion 120 or two fastening protrusions 120. The fastening device 100 may comprise more than one resilient locking mechanism 130. The base portion 110 may be of any shape, e.g. rectangular shape, square shape, or shaped as depicted in Fig. 1. The resilient locking mechanism 130 is arranged between the two fastening protrusions 120. The fastening protrusions 120 are arranged at a longitudinal distance LD1 from each other. The resilient locking mechanism 130 is arranged at a longitudinal distance LD2 from the respective fastening protrusion 120. The resilient locking mechanism 130 is typically arranged closer to one of the two fastening protrusions 120 than the other. The resilient locking mechanism 130 may be arranged equidistant from the respective fastening protrusion 120.

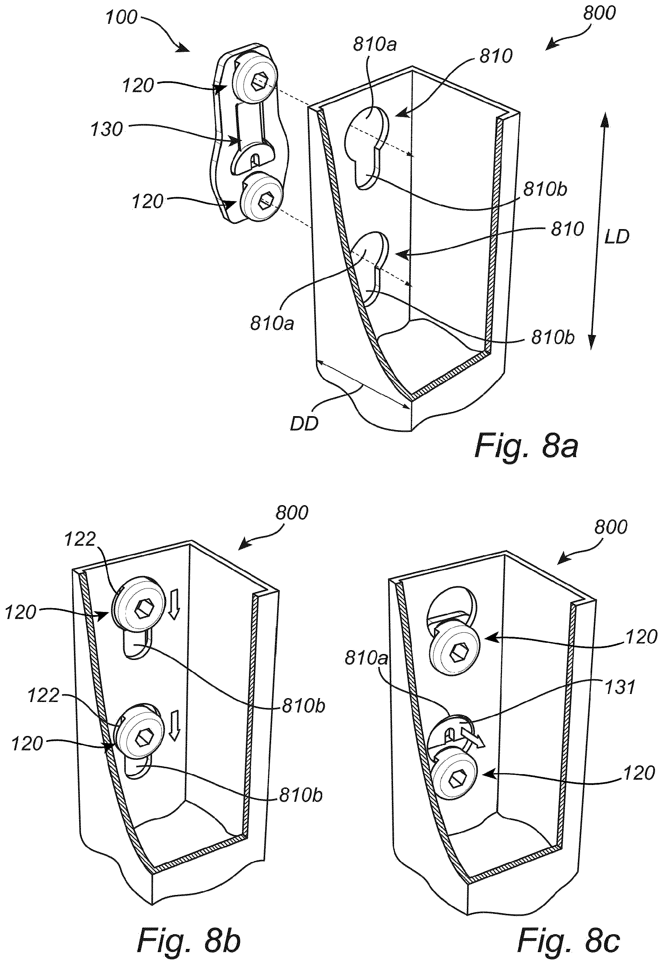

As best illustrated in Figs 8-10, the fastening device 100 is typically configured to be connected to a post 800. The post 800 comprises two apertures 810. When the fastening device 100 is connected to the post 800, the fastening protrusion 120 is configured to engage with an aperture 810 thereby fastening the fastening device 100 to the post 800. When the fastening device 100 is connected to the post 800, the resilient locking mechanism 130 is configured to engage with the same aperture 810 as the fastening protrusion 120 or with another aperture 810 of the post 800 thereby locking the fastening device 100 to the post 800. The aperture 810 which the fastening protrusion 120 engages with may be referred to as a fastening aperture and the aperture 810 which the resilient locking mechanism 130 engages with may be referred to as a locking aperture. It should however be noted that the fastening aperture and the locking aperture may be the same aperture or may be different apertures. The apertures 810 are typically designed in a similar way. As depicted in Fig. 8, where the fastening device 100 comprises two fastening protrusions 120 and one resilient locking mechanism 130, the two protrusions 120 are configured to engage with a respective aperture 810 and the resilient locking mechanism 130 is configured to engage with an aperture 810 which one of the fastening protrusions 120 also engages with. Thus, in this context, it should be noted that the post 800 typically comprises at least a same number of apertures 810 as a number of fastening protrusions 120 of the fastening device 100.

Each aperture 810 comprises a wider part 810a and an adjacent narrower part 810b. When the fastening device 100 is connected to the post 800, the fastening protrusion 120 is typically arranged in the narrower part 810b and the resilient locking mechanism 130 is typically arranged in the wider part 810a. This will be discussed in more detail below.

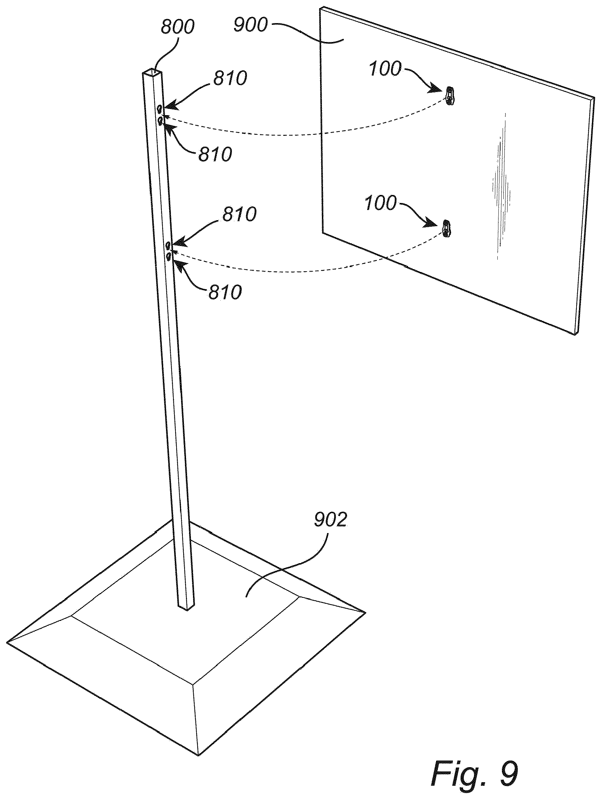

As depicted in Fig. 9, the fastening device 100 is configured to connect a road sign 900 to the post 800, wherein the post 800 is received by a foot 902. The fastening device 100 is typically configured to be attached to the road sign 900 and connected to the post 800 such that the road sign 900 is connected to the post 800 via the fastening device 100. The fastening device 100 may be attached to the road sign 900 by means of bolts or the like, wherein the fastening device 100 comprises bolt holes 125 configured to receive the bolts (see e.g. Fig. 1). In this context, it should be noted that the fastening device 100 is typically riveted on the road sign 900. When the fastening device 100 is attached to the road sign 900 and connected to the post 800, the first side 110a of the fastening device 100 is facing the post 800 and the second side 110b of the fastening device 100 is facing the road sign 900 by way of example. It should however be noted that the fastening device 100 may be configured to connect any type of device to the post 800 and the road sign 900 should only be seen as an example.

Referring back to Figs 1-3, the fastening protrusion 120 comprises a fastening portion 121 and a shaft portion 122. The fastening portion 121 is configured to engage with the fastening aperture 810 (as illustrated in Figs 8 and 9). The shaft portion 122 is configured to connect the fastening portion 121 with the base portion 110. The fastening portion 121 and the shaft portion 122 have a respective transversal extension TE1, TE2 as seen in a transversal direction TD. The fastening portion 121 typically has a wider transversal extension TE1 than the shaft portion 122.

The resilient locking mechanism 130 comprises an engagement portion 131 and a resilient portion 132. The engagement portion 131 is configured to engage with the locking aperture 810 (as illustrated in Figs 8 and 9), which here constitutes the fastening aperture as well. The resilient portion 132 is configured to connect the engagement portion 131 to the base portion 110. The respective fastening protrusion 120 and the engagement portion 131 are arranged at a respective longitudinal distance LD3, LD4 from each other. The longitudinal distances LD3, LD4 are typically different from each other. As further depicted in Figs 1-3, the engagement portion 131 comprises an engagement element 131a and the resilient portion 132 is a resilient tongue. The engagement element 131a is outwardly extending form the engagement portion 131. The resilient tongue comprises a base 132a and a free end 132b, wherein the resilient tongue extends from the base 132a to the free end 132b.

Referring back to Fig. 8, the fastening portion 121 and the shaft portion 122 are movable though the wider part 810a of the aperture 810, wherein only the shaft portion 122 is movable through the narrower part 810b of the aperture 810. The engagement portion 131 is movable through the wider part 810a. As introduced above, when the resilient locking mechanism 130 locks the fastening protrusion 120 to the post 800, the fastening protrusion 120, or more particularly the shaft portion 122 thereof, is arranged in the adjacent narrower part 810b of the aperture 810 and the resilient locking mechanism 130, or more particularly the engagement portion 131 thereof, is arranged in the wider part 810a of the aperture 810. Thereby, the resilient locking mechanism 130 prevents the fastening protrusion 120 from disconnecting from the post 800.

By way of example, when the fastening device 100 is operated to be connected to the post 800, it may first be moved towards the post 800 and then along the post 800 such that the fastening portion 121 and the shaft portion 122 may be moved through the wider part 810a of the aperture 810, in a direction of depth DD, and may thereafter be moved in the longitudinal direction LD towards the adjacent narrower part 810b of the aperture 810 such that the fastening protrusion 120, and more particularly the shaft portion 122 thereof, is received in the adjacent narrower part 810b. When the fastening protrusion 120, thereby, has been arranged in the narrower part 810b, the fastening device 100 is fastened to the post 800 due to that only the shaft portion 122 is movable through the narrower part 810b and not the fastening portion 121, which is positioned inside the post 800. Thus, the fastening protrusion 120 is prevented from moving in the direction of depth DD. Simultaneously, the engagement portion 131 may be moved through the wider part 810a of the apertures 810, in the depth direction DD, thereby locking the fastening device 100 to the post 800. More particularly, when the fastening protrusion 120 is moved through the aperture 810 the engagement portion 131 hits the outer surface of the post 100 and becomes actuated and, thus tensioned. In this embodiment the actuation causes a bending of the resilient portion 132. When the fastening protrusion 120 is then moved longitudinally and reaches the end of the narrower part 810b the resilient locking mechanism 130, and more particularly the engagement portion 131 thereof, is forced into the wider part 810a of the aperture 810 by the tension. In other words, the engagement portion snaps into the aperture 810. Thereby, the fastening protrusion 120 becomes prevented from moving in the longitudinal direction LD due to the arrangement of the resilient locking mechanism 130 with the edge of the aperture 810.

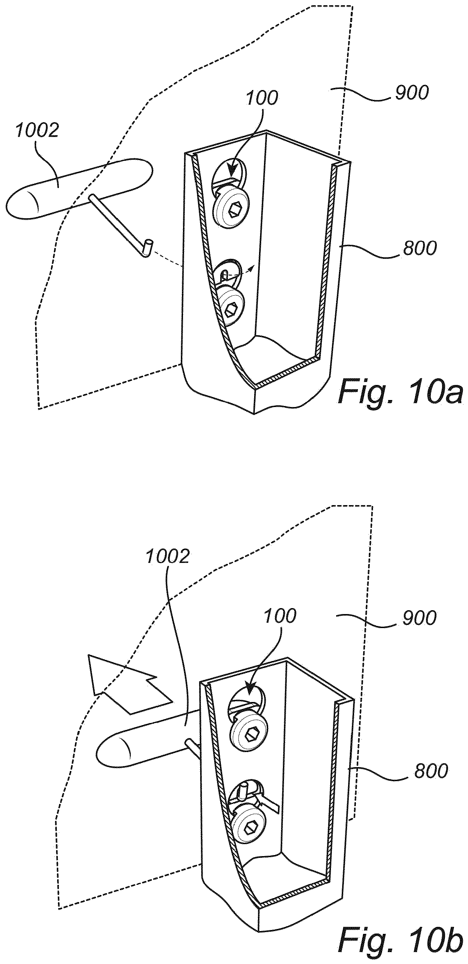

By way of example, when the fastening device 100 is configured to be released from the post 800, the engagement portion 131 may be moved through the aperture 810, in a reverse depth direction DD, and thereafter, the fastening protrusion 120 may be permitted to be moved in a reverse longitudinal direction LD. A tool 1002 may be used to pull the engagement portion 131 out of the aperture 810 in order to unlock the resilient locking mechanism 130, as shown in Figs 10a-b. The fastening protrusion 120 may, thus, be moved from the narrower part 810b to the wider part 810a of the aperture 810 in the reverse longitudinal direction LD. When the fastening protrusion 120 has reached the wider part 810a of the aperture 810, the fastening protrusion 120 is movable through the wider part 810a of the aperture 810, in the reverse direction of depth DD, such that the fastening protrusion 120 is disconnected from the post 800.

Thus, when the fastening device 100 is connected to the post 800, the lower fastening protrusion 120 is arranged in the narrower part 810b of the lower aperture 810, the engagement portion 131 is arranged in the wider part 810a of the lower aperture 810 and the upper fastening protrusion 120 is arranged in the narrower part 810b of the upper aperture 810.

Throughout the application text, the terms upper and lower should only be seen as labels to easily understand which fastening protrusion 120 and/or aperture 810 that is discussed.

As further depicted in Fig. 3, the fastening portion 121 and the shaft portion 122 are connected such that a smooth transition 115 therebetween is formed at an end surface of the fastening device 100.

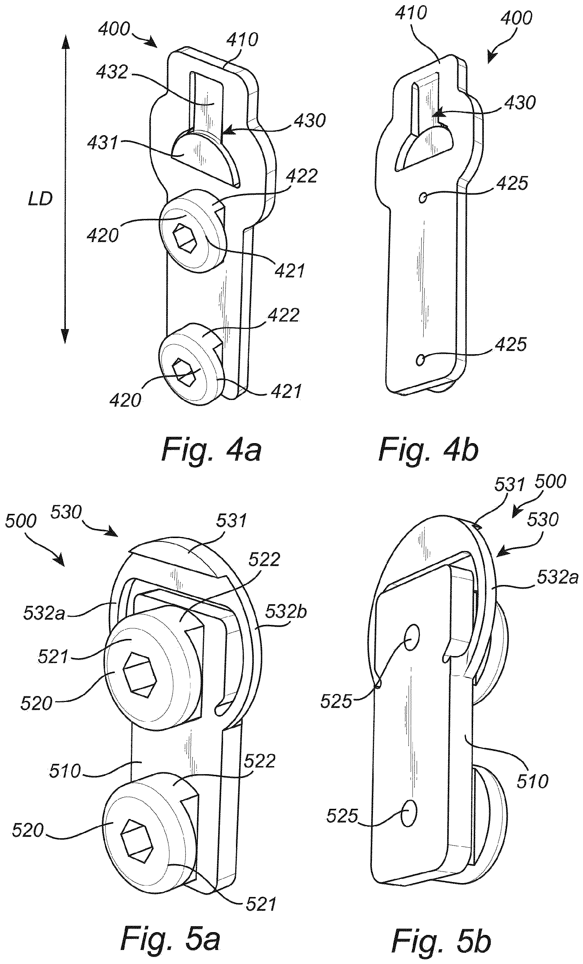

With reference to Figs 4a-b, here is depicted an embodiment of the fastening device 400 in which the resilient locking mechanism 430 exhibit a different form or design as compared to the previously described locking mechanism 130. Fig. 4a is a perspective side view of the embodiment of the fastening device 400 comprising the base portion 410, two fastening protrusions 420 and the resilient locking mechanism 430. Fig. 4b is a perspective rear view of the embodiment of the fastening device 400 comprising the base portion 410, two fastening protrusions 420 and the resilient locking mechanism 430. Each fastening protrusion 420 comprises the fastening portion 421 and the shaft portion 422.

Further to what have been discussed above, the resilient locking member 430 is arranged above the two fastening protrusions 420 such that the two fastening protrusions 420 are arranged at a longitudinal distance from each other and the engagement portion 431 of the resilient locking mechanism 430 is arranged at a longitudinal distance from the upper fastening protrusion 420.

When the embodiment of the fastening device 400 as depicted in Figs 4a-b is connected to the post 800, the lower fastening protrusion 420 is arranged in the narrower part 810b of the lower aperture, the upper fastening protrusion 420 is arranged in the narrower part 810b of the upper aperture, and the engagement portion 431 of the resilient locking mechanism 430 is arranged in the wider part 810a of the upper aperture.

With reference to Figs 5a-b, here is depicted an embodiment of the fastening device 500 in which the resilient locking mechanism 530 exhibit a different form or design as compared to the previously described locking mechanisms 130, 430. Fig. 5a is a perspective side view of the embodiment of the fastening device 500 comprising the base portion 510, two fastening protrusions 520 and the resilient locking mechanism 530. Fig. 5b is a perspective rear view of the embodiment of the fastening device 500 comprising the base portion 510, two fastening protrusions 520 and the resilient locking mechanism 530. Each fastening protrusion 520 comprises the fastening portion 521 and the shaft portion 522.

The resilient locking mechanism 530 comprises the engagement portion 531 and the resilient portion 532a, 532b, wherein the resilient portion 532a-b constitutes the resilient tongue. Further to what have been discussed above, the resilient tongue comprises two resilient tongue parts 532a, 532b wherein the respective resilient tongue part 532a, 532b extends from the engagement portion 531 towards the base portion 510, on a respective side of one of the upper fastening protrusion 520.

When the embodiment of the fastening device 500 as depicted in Figs 5a-b is connected to the post 800, the lower fastening protrusion 520 is arranged in the narrower part 810b of the lower aperture, the upper fastening protrusion 520 is arranged in the narrower part 810b of the upper aperture, and the engagement portion 531 of the resilient locking mechanism 530 is arranged in the wider part 810a of the upper aperture.

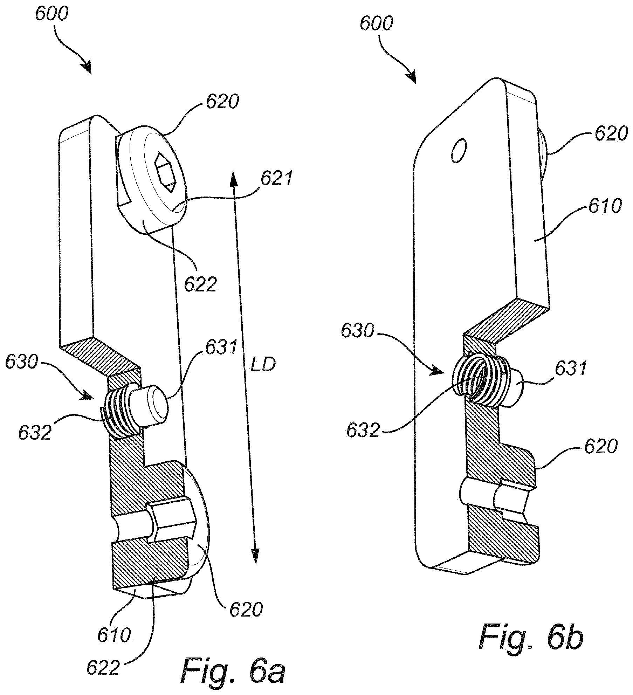

With reference to Figs 6a-b, here is depicted an embodiment of the fastening device 600 in which the resilient locking mechanism 630 exhibit a different form or design as compared to the previously described locking mechanisms 130, 430, 530. Fig. 6a is a perspective side view of the embodiment of the fastening device 600 comprising the base portion 610, two fastening protrusions 620 and the resilient locking mechanism 630. Fig. 6b is a perspective rear view of the embodiment of the fastening device 600 comprising the base portion 610, two fastening protrusions 620 and the resilient locking mechanism 630. Each fastening protrusion 620 comprises the fastening portion 621 and the shaft portion 622.

Further to what have been discussed above, the engagement portion 631 of the resilient locking mechanism 630 comprises an engagement pin 631 and the resilient portion 632 of the resilient locking mechanism 630 is a spring element 632. The resilient locking mechanism 630 is arranged between the two fastening protrusions 620. The engagement pin 631 is arranged closer to one of the fastening protrusions 620 than the other, as seen along the longitudinal direction LD.

When the variant of the fastening device 600 as depicted in Figs 6a-b is connected to the post 800, the lower fastening protrusion 620 is arranged in the narrower part 810b of the lower aperture, the engagement pin 631 is arranged in the wider part 810a of the lower aperture and the upper fastening protrusion 620 is arranged in the narrower part 810b of the upper aperture.

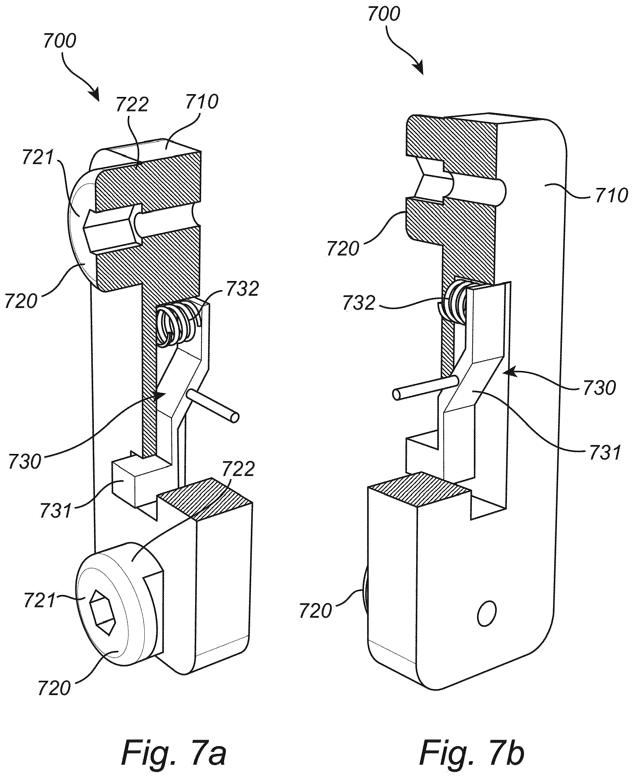

With reference to Figs 7a-b, here is depicted an embodiment of the fastening device 700 in which the resilient locking mechanism 730 exhibit a different form or design as compared to the previously described locking mechanisms 130, 430, 530, 630. Fig. 7a is a perspective side view of the embodiment of the fastening device 700 comprising the base portion 710, two fastening protrusions 720 and the resilient locking mechanism 730. Fig. 7b is a perspective rear view of the embodiment of the fastening device 700 comprising the base portion 710, two fastening protrusions 720 and the resilient locking mechanism 730. Each fastening protrusion 720 comprises the fastening portion 721 and the shaft portion 722.

Further to what have been discussed above, the engagement portion 731 of the resilient locking mechanism 730 is a pivotal element 731 and the resilient portion 732 of the resilient locking mechanism 730 is a spring element 732. The resilient locking mechanism 730 is arranged between the two fastening protrusions 720 as seen in the longitudinal direction LD.

When the embodiment of the fastening device 700 as depicted in Figs 7a-b is connected to the post 800, the lower fastening protrusion 720 is arranged in the narrower part 810b of the lower aperture, the pivotal element 731 is arranged in the wider part 810a of the lower aperture and the upper fastening protrusion 720 is arranged in the narrower part 810b of the upper aperture.

The person skilled in the art realizes that the present invention by no means is limited to the preferred embodiments described above. On the contrary, many modifications and variations are possible within the scope of the appended claims. Additionally, variations to the disclosed embodiments may be understood and effected by the skilled person practicing the claimed invention, from a study of the drawings, the disclosure, and the appended claims.

## Claims

1. A fastening device (100, 400, 500, 600, 700) configured to be connected to a post (800), the fastening device (100, 400, 500, 600, 700) comprising:
a base portion (110, 410, 510, 610, 710), which is plate shaped;
at least one outwardly extending fastening protrusion (120, 420, 520, 620, 720) being arranged at the base portion (110, 410, 510, 610, 710) and being configured to engage with an associated fastening aperture (810) in the post (800); and
a resilient locking mechanism (130, 430, 530, 630, 730) arranged at the base portion (110, 410, 510, 610, 710),
wherein the resilient locking mechanism (130, 430, 530, 630, 730) is configured to engage with an associated locking aperture (810) of the post (800) thereby locking the fastening device (100, 400, 500, 600, 700) to the post (800) and preventing the at least one fastening protrusion (100, 400, 500, 600, 700) from disconnecting from the post (800).

2. The fastening device (100, 400, 500, 600, 700) according to claim 1, wherein the resilient locking mechanism (130, 430, 530, 630, 730) comprises an engagement portion (131, 431, 531, 631, 731) configured to engage with the locking aperture (810) and a resilient portion (132, 432, 532a-b, 632, 732) configured to connect the engagement portion (131, 431, 531, 631, 731) with the base portion (110, 410, 510, 610, 710).

3. The fastening device (100, 400, 500, 600, 700) according to claim 1 or 2, wherein the fastening protrusion (120, 420, 520, 620, 720) comprises a fastening portion (121, 421, 521, 621, 721) configured to engage with the fastening aperture (810) and a shaft portion (122, 422, 522, 622, 722) configured to connect the fastening portion (120, 420, 520, 620, 720) with the base portion (110, 410, 510, 610, 710).

4. The fastening device (100, 400, 500, 600, 700) according to claim 3, wherein the fastening portion (121, 421, 521, 621, 721) has a wider transversal extension (TE1) than the shaft portion (122, 422, 522, 622, 722), and wherein the fastening aperture (810) comprises a wider part (810a), through which the fastening portion (121, 421, 521, 621, 721) and the shaft portion (122, 422, 522, 622, 722) are movable, and an adjacent narrower part (810b), through which only the shaft portion (122, 422, 522, 622, 722) is movable.

5. The fastening device (100, 400, 500, 600, 700) according to any one of claims 2 to 4, wherein the locking aperture (810) comprises a wider part (810a) through which the engagement portion (131, 431, 531, 631, 731) is movable.

6. The fastening device (100, 400, 500, 600, 700) according to claim 5, wherein, when the resilient locking mechanism (130, 430, 530, 630, 730) locks the fastening protrusion (120, 420, 520, 620, 720) to the post (800), the fastening protrusion (120, 420, 520, 620, 720) being arranged in the adjacent narrower part (810b) of the fastening aperture (810) and the engagement portion (131, 431, 531, 631, 731) being arranged in the wider part (810a) of the locking aperture (810) thereby preventing the fastening protrusion (120, 420, 520, 620, 720) from disconnecting from the post (800).

7. The fastening device (100, 400, 500, 600, 700) according to any one of claims 2 to 6, wherein the at least one fastening protrusion (120, 420, 520, 620, 720) and the engagement portion (131, 431, 531, 631, 731) are arranged at a longitudinal distance (LD) from each other.

8. The fastening device (100, 400, 500) according to any one of claims 2 to 7, wherein the engagement portion (131, 431, 531) comprises an engagement element and wherein the resilient portion (132, 432, 532a-b) is a resilient tongue.

9. The fastening device (600) according to any one of claims 2 to 7, wherein the engagement portion (631) comprises an engagement pin and the resilient portion (632) is a spring element.

10. The fastening device (700) according to any one of claims 1 to 7, wherein the engagement portion (731) is a pivotal element, and the resilient portion (732) is a spring element.

11. The fastening device (100, 400, 500, 600, 700) according to any one of the preceding claims comprising two fastening protrusions (120, 420, 520, 620, 720) arranged at the base portion (110, 410, 510, 610, 710) and configured to interact with an associated fastening aperture (810) in the post (800), respectively.

12. The fastening device (100, 400, 500, 600, 700) according to claim 11, wherein the two fastening protrusions (120, 420, 520, 620, 720) are arranged at a longitudinal distance (LD) from each other.

13. The fastening device (100, 400, 500, 600, 700) according to claim 11 or 12, wherein the resilient locking mechanism (130, 430, 530, 630, 730) is arranged between the two fastening protrusions (120, 420, 520, 620, 720) as seen along a longitudinal direction (LD).

14. The fastening device (100, 400, 500, 600, 700) according to claim 11 or 12, wherein the resilient locking mechanism (130, 430, 530, 630, 730) is arranged above the two fastening protrusions (120, 420, 520, 620, 720) as seen along a longitudinal direction (LD).

15. The fastening device (100, 400, 500, 600, 700) according to any one of claims 3 to 14, 110, 410, 510, 610, 710120, 420, 520, 620, 720wherein the fastening portion (121) and the shaft portion (122) are connected such that a smooth transition (115) therebetween is formed at an end surface of the fastening device (100, 400, 500, 600, 700).

16. The fastening device (100, 400, 500, 600, 700) according to any one of the preceding claims, wherein the base portion (110, 410, 510, 610, 710) and the fastening protrusion (120, 420, 520, 620, 720) are integrally formed.

17. The fastening device (100, 400, 500, 600, 700) according to any one of claims 1 to 15, wherein the base portion (110, 410, 510, 610, 710), the fastening protrusion (120, 420, 520, 620, 720) and the resilient locking mechanism (130, 430, 530, 630, 730) are integrally formed.
